# EUROPEAN PATENT APPLICATION

(11) **EP 4 847 446 A1**
(43) Date of publication of application: **02.12.2026**
(21) Application number: 25305788.9
(22) Date of filing: 30.05.2025
(51) Int. Cl.: C01B 3/38, C01B 3/48

(54) **PRODUCING HYDROGEN BY STEAM METHANE AND PARALLEL REFORMING**

(71) Applicant: Technip Energies France, 92741 Nanterre Cedex (FR)
(72) Inventor: WAGNER, Eric Stanley, 92741 Nanterre Cedex (FR); SEKHRI, Sanjeev, 92741 Nanterre Cedex (FR); WEI, Chen, 92741 Nanterre Cedex (FR); CROOK, Micah, 92741 Nanterre Cedex (FR)
(74) Representative: Edson, Russell Gregory

(57) **Abstract**

Techniques for producing hydrogen are disclosed. Producing the hydrogen can include subjecting a hydrocarbon feed stream to a reforming reaction at a steam methane reformer to produce an effluent, followed by producing a mixed synthesis gas stream by subjecting a mixed hydrocarbon feed stream to a reforming reaction in a cooperating parallel reactor using heat from the effluent to support the reforming reaction. The mixed synthesis gas stream can be subjected to a shift reaction to convert carbon monoxide present therein to carbon dioxide, and may then be directed to a carbon dioxide removal unit to at least partially decarbonize the mixed synthesis gas stream. A partially decarbonized mixed synthesis gas stream from the carbon dioxide removal unit can be received at a purification unit, where hydrogen can be separated from the partially decarbonized mixed synthesis gas stream to produce a hydrogen end product.

## Description

### Technical Field

The present disclosure relates generally to producing hydrogen, and more particularly although not necessarily exclusively, to producing hydrogen from a hydrocarbon feedstock using a combination of a steam methane reformer and a parallel reformer.

### Background

Hydrogen can be produced from a hydrocarbon feedstock such as, for example, natural gas, liquefied petroleum gas, biogas, naphtha or a carbon-rich off-gas. For example, a synthesis gas that includes hydrogen can be generated from a hydrocarbon feedstock using a steam methane reforming process whereby the hydrocarbon feedstock undergoes a reforming reaction in the presence of heat and a catalyst. The synthesis gas can be purified to remove contaminants and to produce additional hydrogen. Carbon dioxide may be produced as a byproduct of hydrogen production, such as by combustion of a carbon-based fuel for heating the hydrocarbon feedstock to the temperatures needed to carry out a reforming reaction. It is desirable to reduce carbon dioxide emissions associated with producing hydrogen by steam methane reforming.

### Summary

As used below, any reference to a series of examples is to be understood as a reference to each of those examples disjunctively (e.g., "Example Nos. 1-4" or "Example No. 1 to Example No. 4" is to be understood as "Examples 1, 2, 3, or 4").

Example No. 1 is a method including producing an effluent stream comprising hydrogen, carbon monoxide, carbon dioxide, and unreacted steam and methane by directing a first portion of a heated mixed hydrocarbon feed stream to an electric steam methane reformer. The method also includes receiving, at a first inlet of a parallel reformer located downstream of the electric steam methane reformer, the effluent stream from the electric steam methane reformer, and receiving, at a second inlet of the parallel reformer, a reformer feed stream including steam and a second portion of the heated mixed hydrocarbon feed stream. The method additionally includes producing a mixed synthesis gas stream including hydrogen, carbon monoxide, carbon dioxide, and unreacted steam and methane at the parallel reformer using, at least in part, heat from the effluent stream, and producing a hydrogen end product by separating hydrogen from the mixed synthesis gas stream.

Example No. 2 is Example No. 1, wherein the heated mixed hydrocarbon feed stream further includes a purge gas that is received from a downstream purification unit.

Example No. 3 is Example No. 1 or Example No. 2, wherein the heated mixed hydrocarbon feed stream is produced by heating a mixed hydrocarbon feed stream using an electric mixed feed preheater or a gas-fired mixed feed preheater.

Example No. 4 is Example No. 3, wherein the mixed feed preheater is a gas-fired mixed feed preheater and a purge gas produced by a downstream purification unit is provided as a fuel gas to the mixed feed preheater.

Example No. 5 is any of Example Nos. 1-4, wherein the heat used to support reforming reactions in the electric steam methane reformer is provided by an electric heating technique selected from the group consisting of resistive heating, inductive heating, microwave heating, and electro-reforming heating.

Example No. 6 is any of Example Nos. 1-5, wherein the mixed synthesis gas stream from the parallel reformer is received at a downstream shift unit and subjected to a shift reaction where carbon monoxide in the mixed synthesis gas stream is converted to carbon dioxide by a water-gas shift reaction to produce a carbon dioxide rich synthesis gas stream.

Example No. 7 is Example No. 6, wherein the carbon dioxide rich synthesis gas stream from the shift unit is received at a downstream carbon dioxide removal unit and carbon dioxide is removed from the carbon dioxide rich synthesis gas stream using a carbon dioxide removal technique selected from the group consisting of solvent-based absorption, pressure swing adsorption, vacuum adsorption, cryogenic carbon capture, and membrane separation.

Example No. 8 is Example No. 7, wherein a partially decarbonized synthesis gas stream including hydrogen and unconverted carbon monoxide and methane from the carbon dioxide removal unit is received at a downstream purification unit and carbon monoxide and methane are removed from the partially decarbonized synthesis gas stream via pressure swing adsorption or cryogenic washing to produce the hydrogen end product.

Example No. 9 is a system including an electric steam methane reformer arranged to produce an effluent stream comprising hydrogen, carbon monoxide, carbon dioxide, and unreacted steam and methane from a first portion of a heated mixed hydrocarbon feed stream. The system also includes a parallel reformer arranged downstream of the electric steam methane reformer to receive the effluent stream from the electric steam methane reformer at a first inlet, to receive a reformer feed stream including steam and a second portion of the heated mixed hydrocarbon feed stream at a second inlet, and to produce a mixed synthesis gas stream including hydrogen, carbon monoxide, carbon dioxide, and unreacted steam and methane using, at least in part, heat from the effluent stream. The system additionally includes a purification unit arranged downstream of the parallel reformer to receive the mixed synthesis gas stream from the parallel reformer and to produce a hydrogen end product by separating hydrogen from the mixed synthesis gas stream.

Example No. 10 is Example No. 9, wherein the heated mixed hydrocarbon feed stream further includes a purge gas produced by the purification unit.

Example No. 11 is Example No. 9 or Example No. 10, further including an electric mixed feed preheater or a gas-fired mixed feed preheater arranged in a flow path of a mixed hydrocarbon feed stream to produce the heated mixed hydrocarbon feed stream.

Example No. 12 is Example No. 11, wherein the mixed feed preheater is a gas-fired mixed feed preheater that is in fluid communication with the purification unit to receive as a fuel gas therefrom, a purge gas produced by the purification unit.

Example No. 13 is any of Example Nos. 9-12, wherein the electric steam methane reformer includes an electric heating mechanism selected from the group consisting of a resistive heater, an inductive heater, a microwave heater, and an electro-reforming cell.

Example No. 14 is any of Example Nos. 9-13, further including a shift unit arranged to receive the mixed synthesis gas stream from the parallel reformer and to subject the mixed synthesis gas stream to a shift reaction whereby carbon monoxide in the mixed synthesis gas stream is converted to carbon dioxide.

Example No. 15 is Example No. 14, further including a downstream carbon dioxide removal unit arranged to receive a carbon dioxide rich synthesis gas stream from the shift unit and to remove carbon dioxide from the carbon dioxide rich synthesis gas stream using a carbon dioxide removal technique selected from the group consisting of solvent-based absorption, pressure swing adsorption, vacuum adsorption, cryogenic carbon capture, and membrane separation.

Example No. 16 is Example No. 15, wherein the purification unit is arranged to receive a partially decarbonized synthesis gas stream including hydrogen, and unconverted carbon monoxide and methane from the carbon dioxide removal unit and to remove carbon monoxide and methane from the partially decarbonized synthesis gas stream via pressure swing adsorption or cryogenic washing to produce the hydrogen end product.

Example No. 17 is a method including heating a mixed hydrocarbon feed stream using a gas-fired mixed feed preheater to produce a heated mixed hydrocarbon feed stream, reforming a first portion of the heated mixed hydrocarbon feed stream in an electric steam methane reformer to produce an effluent stream including hydrogen, carbon monoxide, carbon dioxide, and unreacted steam and methane, and reforming a second portion of the heated mixed hydrocarbon feed stream at a parallel reformer using, at least in part, heat from the effluent stream received by the parallel reformer. The method also includes receiving a mixed synthesis gas stream including hydrogen, carbon monoxide, carbon dioxide, and unreacted steam and methane from the parallel reformer at a purification unit and producing a purge gas stream by separating carbon monoxide and carbon dioxide from the hydrogen in the mixed synthesis gas stream, and supplying at least a portion of the purge gas stream as a fuel gas to the gas-fired mixed feed preheater.

Example No. 18 is Example No. 17, wherein another portion of the purge gas is directed to the mixed hydrocarbon feed stream.

Example No. 19 is Example No. 17 or Example No. 18, wherein prior to the mixed synthesis gas stream being received at the purification unit, the mixed synthesis gas stream is directed from the parallel reformer to a shift unit and is subjected to a shift reaction where carbon monoxide in the mixed synthesis gas stream is converted to carbon dioxide by a shift reaction. The mixed synthesis gas stream is also directed from the shift unit to a downstream carbon dioxide removal unit where carbon dioxide is removed from the mixed synthesis gas stream using a carbon dioxide removal technique selected from the group consisting of solvent-based absorption, pressure swing adsorption, vacuum adsorption, cryogenic carbon capture, and membrane separation.

Example No. 20 is any of Example Nos. 17-19, wherein the purification unit separates the carbon monoxide and carbon dioxide from the hydrogen in the mixed synthesis gas stream via pressure swing adsorption or cryogenic washing.

### Brief Description of the Drawings

FIG. 1 is a block diagram of a portion of a hydrogen generation system according to one example configuration.
FIG. 2 is a block diagram of another portion of the hydrogen generation system of FIG. 1 according to one example configuration.
FIG. 3 is a flowchart describing a method of producing hydrogen according to one example.

### Detailed Description

Certain aspects and examples of the present disclosure relate to a system and method for generating hydrogen with reduced carbon dioxide emissions. For example, hydrogen may be produced at a hydrogen generation system by initially producing a synthesis gas effluent comprising hydrogen, carbon monoxide, carbon dioxide, and unreacted steam (e.g., water) and methane via an initial reforming reaction of a portion of a mixed hydrocarbon feed stream in a steam methane reactor (SMR). A mixed synthesis gas stream comprising hydrogen, carbon monoxide, carbon dioxide, and unreacted steam and methane can then be produced via an additional reforming reaction of another portion of the mixed hydrocarbon feed stream at a parallel reformer - i.e., a non-fired secondary convective-regenerative reformer that operates in parallel with the SMR and uses effluent discharged from the SMR to meet the heat duty of the parallel reformer. The mixed synthesis gas stream discharged from the parallel reformer can be directed downstream to a purification unit to produce a hydrogen end product by removing impurities from the mixed synthesis gas stream.

In some examples, the hydrogen production techniques according to the present disclosure can more specifically include directing a feed gas (e.g., natural gas) stream into a desulfurizing unit of the hydrogen generation system to produce a desulfurized feed gas stream. The desulfurized feed gas stream can be subsequently combined with saturated steam and a compressed and recycled purge gas stream from the downstream purification unit to form a mixed feed stream. The mixed feed stream may be heated and then directed to the steam methane reactor (SMR) of the hydrogen generation system. The SMR may be an electric steam methane reactor (eSMR), where the heat required to support a reforming reaction of the methane in the heated mixed feed stream can be supplied by an electric heat source instead of through the combustion of a fuel gas. In some examples, heating of the mixed feed stream to produce the heated mixed feed stream directed to the eSMR may be performed using an electric mixed feed preheater or a combustion (fired) mixed feed preheater. When a fired preheater is utilized, the fired preheater may use some of the purge gas from the downstream purification unit as a fuel gas according to some examples.

The effluent resulting from the reforming reaction in the eSMR may be discharged therefrom. The eSMR effluent may include some amounts of methane and water in addition to hydrogen, carbon monoxide, and carbon dioxide. The eSMR effluent can be received at a shell side of the downstream parallel reformer, while a diverted portion of the heated mixed feed stream that was not provided to the eSMR can be received at a tube side of the parallel reformer. Within reformer tubes in the tube side of the parallel reformer, the saturated steam and heated mixed feed stream mixture can undergo an endothermic reaction by which the mixture is reformed into a synthesis gas comprising hydrogen, carbon monoxide, carbon dioxide, methane and water in a manner analogous to production of the eSMR effluent. An effluent (process gas) produced in the tube side of the parallel reformer can exit along bottoms of the parallel reformer tubes and mix with the hot eSMR effluent received in the shell side of the parallel reformer. The hot mixture may then flow upward through the shell side of the parallel reformer to generate the heat needed to support the endothermic reforming reaction of the saturated steam and heated mixed feed stream mixture within the parallel reformer tubes. A resulting high temperature mixed synthesis gas stream may be discharged from the parallel reformer.

Purifying the synthesis gas stream can, in some examples, initially include receiving the mixed synthesis gas stream from the parallel reformer at a shift unit of the hydrogen generation system. The shift unit can convert carbon monoxide in the mixed synthesis gas stream to carbon dioxide via a shift reaction. After being subjected to the shift reaction, the mixed synthesis gas stream may be directed to a carbon dioxide removal unit where at least some of the carbon dioxide in the mixed synthesis gas stream can be removed and captured. The carbon dioxide removal unit may utilize different carbon dioxide removal techniques in different examples. In one example, the carbon dioxide removal unit may utilize a solvent-based carbon dioxide removal technique. For example, the mixed synthesis gas stream may be passed through an absorption column containing an amine solvent, which can strip carbon dioxide from the mixed synthesis gas stream to produce a partially decarbonized synthesis gas stream comprising hydrogen, and unconverted carbon monoxide and methane. The carbon dioxide containing solvent can then be heated in a solvent regenerator (e.g., desorber column) to regenerate the solvent by releasing the carbon dioxide therefrom. The released carbon dioxide can be captured for subsequent sequestration or use.

The partially decarbonized synthesis gas stream may subsequently be directed to a purification unit in which the hydrogen end product can be produced by removing carbon monoxide and methane from the partially decarbonized synthesis gas stream. In some examples, the purification unit may employ a pressure swing adsorption (PSA) process to produce the hydrogen end product from the partially decarbonized synthesis gas stream. In other examples, a different technique may be used to produce the hydrogen end product from the partially decarbonized synthesis gas stream. For example, and without limitation, the purification unit may utilize a cryogenic washing technique in other examples. In any case, a resulting hydrogen end product stream may be discharged from the purification unit.

In some examples, a purge gas stream generated by the purification unit as a result of removing methane and carbon monoxide from the partially decarbonized synthesis gas stream may be recycled back to the hydrogen generation system. For example, when the mixed feed preheater is a fired preheater, a percentage of the purge gas stream may be compressed and directed as a fuel gas to the fired mixed feed preheater. In some examples, a percentage of the purge gas may be sent to and used by secondary process equipment of the hydrogen generation system or may be transferred out of the hydrogen generation system to other locations.

As described in more detail below, example configurations of a hydrogen generation system can produce high purity (e.g., 99.9%) hydrogen. By employing an eSMR to reform hydrogen, a hydrogen generation system according to examples of the present disclosure may also achieve a reduction in carbon dioxide emissions in comparison to traditional hydrogen generation systems that generate reaction heat using combustion-based heat sources. Use of a parallel reformer in conjunction with an eSMR can also reduce the electrical heating load associated with the eSMR. In examples where an electric mixed feed preheater is employed, the heat balance of the hydrogen generation system may be improved, which can also reduce the carbon dioxide emissions of the hydrogen generation system. Likewise, flash recycling may be utilized in association with the carbon dioxide removal process, which can eliminate flash purge gas emissions. In addition to recycling at least some of the purge gas discharged from the purification unit as described above, part of the hydrogen end product stream may also be recycled, such as by providing it to a feed gas pre-warmer. In some examples, the hydrogen generation system may also operate with no net export of steam. Hydrogen generation techniques according to the present disclosure, such as the use of an eSMR, and the use of a parallel reformer in combination with a SMR or eSMR, can be incorporated into the design of a new hydrogen generation system or may be retrofit to an existing hydrogen generation system.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

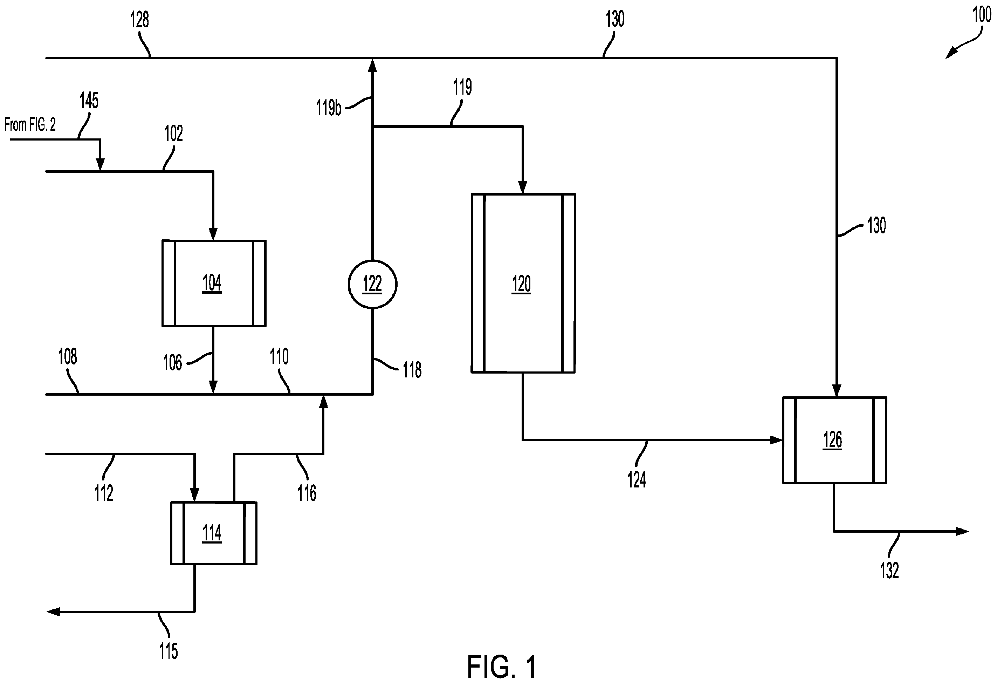

FIG. 1 is a block diagram of a portion of a hydrogen generation system 100 according to one example configuration. As shown, a hydrocarbon feed stream 102 may be directed to a desulfurization unit 104 of the hydrogen generation system 100. In this example, the hydrocarbon feed stream 102 may be a natural gas stream, but the hydrocarbon feed stream 102 may instead be a stream of another hydrocarbon such as a biogas, a liquefied petroleum gas, naphtha, or a carbon-rich off-gas in other system examples. The desulfurization unit 104 may, for example, remove hydrogen sulfide from the feed gas stream 102. The desulfurization unit 104 may use any of various techniques for this purpose, including absorbing the hydrogen sulfide by contacting the feed gas stream 102 with a liquid solvent in an absorption tower. In some examples, more than one absorption tower may be used for this purpose. After the desulfurization operation, a desulfurized feed gas stream 106 may be discharged from the desulfurization unit 104. The desulfurized feed gas stream 106 may then be mixed with steam 108 to form a heated desulfurized feed gas stream 110 in some examples.

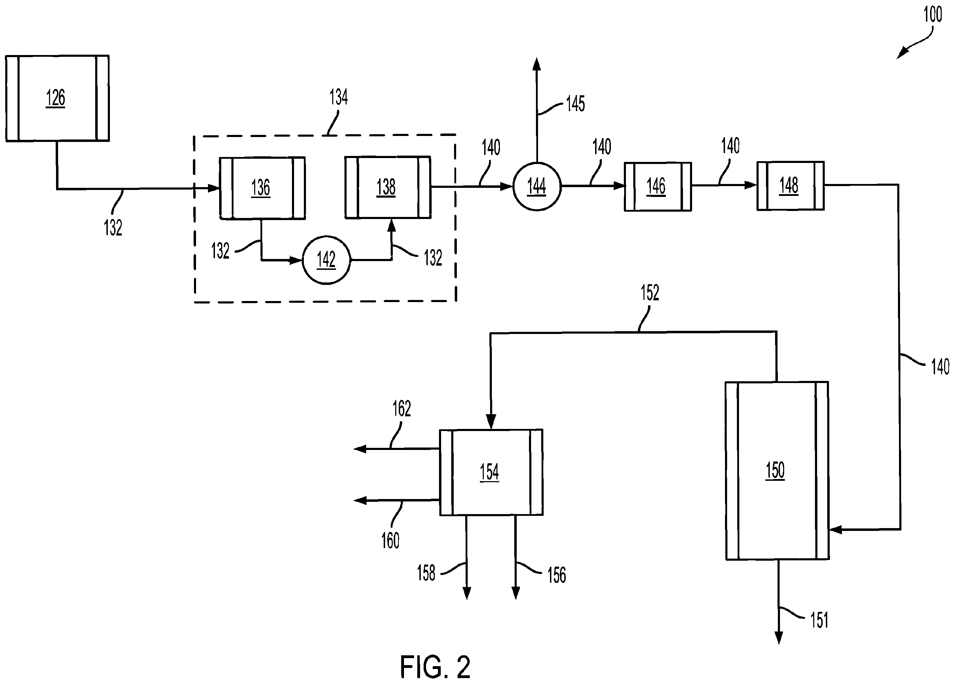

A purge gas recycle stream 112 from a downstream purification unit (such as the purification unit 154 of FIG. 2) may be provided to a gas compressor 114 and compressed therein to form a compressed purge gas recycle stream 116. The compressed purge gas recycle stream 116 may be combined with the heated desulfurized feed gas stream 110 to form a mixed feed stream 118. Condensates 115 generated during compression of the purge gas recycle stream 112 may be sent to a deaerator or to another device or location. In some examples, the mixed feed stream 118 may have a steam to carbon ratio of approximately 3.0.

A portion of the mixed feed stream 118 may be directed to an electric steam methane reformer (eSMR) 120. In some examples, the mixed feed stream 118 may be heated by a mixed feed preheater 122 to produce a heated mixed feed stream 119. A portion (e.g., approximately 70% - 90%) of the heated mixed feed stream 119 can then be provided to the eSMR 120. In some examples, the temperature of the heated mixed feed stream 119 received by the eSMR 120 may be between approximately 900 °F to 1,300 °F. In some examples, the mixed feed preheater 122 may be an electric mixed feed preheater. the In other examples, the mixed feed preheater 122 may be a combustion (e.g., gas-fired) mixed feed preheater. When the mixed feed preheater 122 is a gas-fired preheater, the mixed feed preheater 122 may use some of aforementioned purge gas as a fuel gas.

Within the eSMR 120, the heated mixed feed stream 119 can undergo a reforming reaction via contact with a catalyst in the presence of heat. In the case of the eSMR 120, the heat required to support the reforming reaction can be supplied via electric heating instead of through the combustion of a fuel gas. For example, the eSMR 120 may employ resistive heating, electro-reforming heating, inductive heating, microwave heating, or other electric heating techniques to provide the heat required to support the reforming reaction of the heated mixed feed stream 119. The reforming reaction of the heated mixed feed stream 119 in the eSMR 120 generates an eSMR effluent stream 124. The eSMR effluent stream 124 is a mixed synthesis gas stream. The eSMR effluent stream 124 may include, for example, hydrogen, carbon monoxide, and carbon dioxide, as well as some amounts of unreacted steam (e.g., water) and methane.

In this example configuration, the hydrogen generation system 100 further includes a parallel reformer 126, which is arranged downstream of the eSMR 120. The parallel reformer 126 may have a shell and tube construction in which another portion 119b of the heated mixed feed stream 119 can be steam reformed to a mixture of hydrogen, carbon monoxide, carbon dioxide, methane and water in an analogous manner to the reforming reactions that occur in the eSMR 120. More specifically, the eSMR effluent 124 discharged from the eSMR 120 can be directed to a shell side of the parallel reformer 126, and the diverted portion 119b (e.g., approximately 10% to 30%) of the heated mixed feed stream 119 that was not provided to the eSMR 120 can be combined with steam 128 to form a further heated mixed feed stream 130 that can be directed to a tube side of the parallel reformer 126. In some examples, the heated mixed feed stream 130 may have a steam to carbon ratio of approximately 4.0. Within the tube side of the parallel reformer 126, the further heated mixed feed stream 130 can undergo the above-described reforming reaction by contact with a catalyst in at least some of the parallel reformer tubes. An effluent (process gas) generated in the tube side of the parallel reformer 126 as a result of the reforming reaction may exit the parallel reformer tubes and mix with the incoming hot eSMR effluent 124 and the hot mixture may then flow upward through the shell side of the parallel reformer 126 to provide the heat needed to support the reforming reaction within the reformer tubes of the parallel reformer 126. A reformed gas stream in the form of a mixed synthesis gas stream 132 may be discharged from the parallel reformer 126. For example, the mixed synthesis gas stream 132 may flow through a central collector pipe in the middle of the parallel reformer 126 and may be discharged from a bottom of the parallel reformer 126. In some examples, the temperature of the mixed synthesis gas stream 132 may be between approximately 1,200 °F to 1,400 °F at the exit of the parallel reformer 126.

FIG. 2 is a block diagram of another portion of the hydrogen generation system of FIG. 1 according to one example configuration. More particularly, FIG. 2 illustrates additional components of the hydrogen generation system 100 that may be used for, among other purposes, purifying the mixed synthesis gas stream 132 discharged from the parallel reformer 126.

While various techniques may be used to purify the mixed synthesis gas stream 132, this example of the hydrogen generation system 100 employs a shift reaction followed by carbon dioxide removal and further treatment to produce a hydrogen end product. As illustrated in FIG. 2, the mixed synthesis gas stream 132 discharged from the parallel reformer 126 may initially be received at a shift unit 134 of the hydrogen generation system 100. The shift unit 134 may be used to convert carbon monoxide and steam in the mixed synthesis gas stream 132 to carbon dioxide and hydrogen via an exothermic water-gas shift reaction. The shift unit 134 may may include one or more shift reactors in different examples. In the example of FIG. 2, the shift unit 134 includes a first (e.g., high temperature) shift reactor 136 and a second (e.g., low temperature) shift reactor 138 that may cooperate to convert carbon monoxide and steam in the mixed synthesis gas stream 132 to carbon dioxide and hydrogen. For example, the mixed synthesis gas stream 132 from the parallel reformer 126 may be received at the first shift reactor 136, subjected to an initial shift reaction, and then provided to the second shift reactor 138 and subjected to an additional shift reaction.

As a result of the shift reaction operations by the shift reactors 136, 138 of the shift unit 134, a carbon dioxide rich synthesis gas stream 140 may be discharged from the shift unit 134. The carbon dioxide rich synthesis gas stream 140 is carbon rich in the sense that it has a carbon dioxide content that is greater than the carbon dioxide content of the mixed synthesis gas stream 132 prior to being subjected to the shift reactions in the shift unit 134. The carbon dioxide rich synthesis gas stream 140 may be discharged from the shift unit 134 at a temperature that is less than the temperature of the mixed synthesis gas stream 132 at the entrance to or the exit of the first shift reactor 136. For example, the mixed synthesis gas stream 132 may enter the first shift reactor 136 at a temperature of between approximately 550 °F to 700 °F while the carbon dioxide rich synthesis gas stream 140 may enter the second shift reactor 138 at a temperature of between approximately 350 °F to 400 °F.

As represented in FIG. 2, heat may be recovered from the mixed synthesis gas stream 132 in some example configurations. For example, a first heat recovery device 142 may be arranged to recover heat from the mixed synthesis gas stream 132 at a point between an exit of the first shift reactor 136 and an entrance to the second shift reactor 138. In this example of the hydrogen generation system 100, a second heat recovery device 144 may also be arranged to recover heat 145 from the carbon dioxide rich synthesis gas stream 140 after its discharge from the shift unit 134. Heat recovered by the first heat recovery device 142 or heat 145 recovered from the second heat recovery device 144 may be used for various purposes, such as for example, to preheat the hydrocarbon feed stream (as represented in FIG. 1), to heat boiler feed water or demineralized water, to heat reboilers, to generate steam, etc.

Before being subjected to a carbon dioxide removal operation, it may be desirable to further cool the carbon dioxide rich synthesis gas stream 140. For this purpose, the carbon dioxide rich synthesis gas stream 140 may be directed to at least one cooling device 146. In some examples, the at least one cooling device 146 may be an air cooler, a trim cooler, or combination of both. In some examples, the carbon dioxide rich synthesis gas stream 140 may exit the at least one cooling device 146 at a temperature of between approximately 100 °F to 130 °F. In an example where the at least one cooling device 146 is an air cooler in combination with a trim cooler, the carbon dioxide rich synthesis gas stream 140 may exit the trim cooler at a temperature of between approximately 100 °F to 120 °F.

At least one condensate separator 148 may be arranged to receive the carbon dioxide rich synthesis gas stream 140 after cooling thereof by the at least one cooling device 146 and to remove condensation from the carbon dioxide rich synthesis gas stream 140. In some examples, the condensation may be used in a steam section of the hydrogen generation system 100. For example, the condensate can be utilized to generate at least a portion of the steam used in a steam reforming process or a water-gas shift reaction, to drive downstream compressors, or for other purposes.

The cooled carbon dioxide rich synthesis gas stream 140 may then be directed to a carbon dioxide removal unit 150 to remove carbon dioxide from the carbon dioxide rich synthesis gas stream 140. One or more types of carbon dioxide removal technology may be used by the carbon dioxide removal unit 150. For example, one or a combination of solvent-based absorption, pressure swing adsorption, vacuum adsorption, cryogenic carbon capture, or membrane-based carbon dioxide removal technologies may be utilized. In the particular example depicted in FIG. 2, the carbon dioxide rich synthesis gas stream 140 can be passed through an absorption column containing a solvent, such as methyldiethanolamine (MDEA), which can strip carbon dioxide from the carbon dioxide rich synthesis gas stream 140. In other non-limiting examples, carbon dioxide removal may be performed using a solvent such as monoethanolamine (MEA), diethanolamine (DEA), diisopropanolamine (DIPA), or diglycolamine (DGA). The carbon dioxide removal unit 150 may also include a solvent regenerator (e.g. desorber column) in which used solvent can be regenerated (i.e., carbon dioxide can be removed from the solvent via heating and then captured). A high pressure flash operation, a low pressure flash operation, or both, may be further utilized to increase carbon dioxide recovery at the carbon dioxide removal unit 150. Flash gas from the flash operation(s) may be recycled to an absorber feed of the carbon dioxide removal unit 150 to further increase carbon dioxide recovery and to reduce carbon dioxide emissions. Captured carbon dioxide 151 may be recovered to another location, and a partially decarbonized synthesis gas stream 152 may be discharged from the carbon dioxide removal unit 150 for downstream purification.

Purifying the partially decarbonized synthesis gas stream 152 may include receiving the partially decarbonized synthesis gas stream 152 at a purification unit 154. The partially decarbonized synthesis gas stream 152 may contain mostly hydrogen, but may also contain some amount of unconverted carbon monoxide and methane, as well as certain inert gases. In the purification unit 154, the partially decarbonized synthesis gas stream 152 may be further treated to remove carbon monoxide and methane, which increases the hydrogen content percentage of the partially decarbonized synthesis gas stream 152. Various treatment techniques may be implemented at the purification unit 154 for this purpose. For example, the partially decarbonized synthesis gas stream 152 may be subjected to a pressure swing adsorption (PSA) process or another process via which the partially decarbonized synthesis gas stream 152 may be treated to produce a purified hydrogen end product stream 156.

In some examples, the PSA process may recover between approximately 82% to 90% of the hydrogen present in the partially decarbonized synthesis gas stream 152. In some examples, the hydrogen content of the hydrogen end product stream 156 may be approximately 99.9% or higher. The hydrogen end product stream 156 can be discharged to a downstream location, such as for use in another off-site process, for sale, etc. In some examples, the hydrogen end product stream 156 may be compressed before being discharged to a downstream location. In some examples, a portion of the hydrogen recovered by the purification unit 154 may be compressed and recycled back to the hydrogen generation system 100. For example, a second hydrogen stream 158 or otherwise some amount of the hydrogen end product discharged from the purification unit 154 may be sent to and used by a feed pre-warmer of the hydrogen generation system 100 to ensure the hydrocarbon feed stream provided to the eSMR 120 has a desired hydrogen content (e.g., between 2% to 20%).

The purification unit 154 may also generate a purge gas as a result of removing methane and carbon monoxide from the partially decarbonized synthesis gas stream 152. In some examples, the purge gas may contain approximately 50% hydrogen, carbon monoxide, and methane per unit volume. In other examples, the purge gas may contain approximately 70% hydrogen, carbon monoxide, and methane per unit volume or approximately 90% hydrogen, carbon monoxide, and methane per unit volume. In some examples, a first purge gas stream 160 or otherwise some amount of the purge gas discharged from the purification unit 154 can be recycled back to the hydrogen generation system 100. For example, when the mixed feed preheater 122 is a gas-fired preheater, the first purge gas stream 160 may be directed to the gas compressor 114, where it may be compressed and then directed as a fuel gas to the gas-fired mixed feed preheater 122. In some examples, a second purge gas stream 162 or otherwise some amount of the purge gas discharged from the purification unit 154 may be sent to and used by secondary process equipment of the hydrogen generation system 100, or may be transferred out of the hydrogen generation system to other locations.

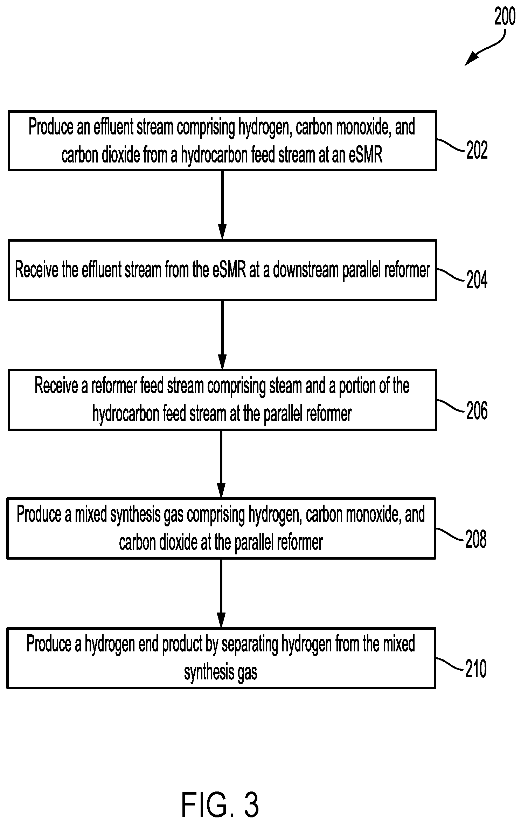

FIG. 3 is a flowchart 200 describing a method of producing hydrogen from a hydrocarbon feed stream according to one example. As indicated in block 202, an effluent stream may be produced by directing a first portion of a heated mixed hydrocarbon feed stream to an electric steam methane reformer (eSMR). The effluent stream can be produced as a result of a reforming reaction of the hydrocarbon feed stream in the eSMR. The effluent stream may include, for example, hydrogen, carbon monoxide, and carbon dioxide, as well as some amounts of unreacted steam and methane. In some examples, the hydrocarbon feed stream may comprise natural gas. In other examples, the hydrocarbon feed stream may instead comprise another hydrocarbon such as a biogas, a liquefied petroleum gas, naphtha, or a carbon-rich off-gas. The electric steam methane reformer may utilize various electric heating techniques to provide the heat necessary to support a reforming reaction therein. For example, the electric steam methane reformer can provide the heat needed by the reforming reaction using resistive heating, inductive heating, microwave heating, or through electro-reforming.

In some examples, the heated mixed hydrocarbon feed stream may be produced by heating a mixed hydrocarbon feed stream using an electric mixed feed preheater or a gas-fired mixed feed preheater. When the mixed feed preheater is a gas-fired mixed feed preheater, a purge gas produced by a downstream purification unit can be provided as a fuel gas to the mixed feed preheater. In some examples, a portion of the purge gas may also be added to the mixed hydrocarbon feed stream. When the mixed feed preheater is an electric mixed feed preheater, the heat balance of the hydrogen generation system may be improved (closed), which can also reduce the carbon dioxide emissions of the hydrogen generation system.

As indicated in block 204, the effluent stream from the electric steam methane reformer can be received at a first inlet of a parallel reformer that is located downstream of the electric steam methane reformer. The parallel reformer may have a shell and tube construction and the first inlet of the parallel reformer may be a shell side inlet.

As indicated in block 206, a reformer feed stream comprising steam and a second portion of the heated mixed hydrocarbon feed stream can be received at a second inlet of the parallel reformer. The second inlet of the parallel reformer may be a tube side of the parallel reformer. Within the tube side of the parallel reformer, the heated mixed feed stream can undergo a reforming reaction, and an effluent generated in the tube side of the parallel reformer as a result of the reforming reaction can be combined with the eSMR effluent in the shell side of the parallel reformer to generate the heat needed to support the reforming reaction within the parallel reformer.

As indicated in block 208, a mixed synthesis gas stream comprising hydrogen, carbon monoxide, carbon dioxide, and unreacted steam and methane can be produced at the parallel reformer using, at least in part, heat from the effluent stream as described above. The mixed synthesis gas stream can be discharged from the parallel reformer. In some examples, the mixed synthesis gas stream may be discharged from a bottom of the parallel reformer after passing through a central collector pipe in the middle of the parallel reformer.

As indicated in block 210, a hydrogen end product can be produced by separating hydrogen from the mixed synthesis gas stream at the purification unit. Hydrogen can be separated from the mixed synthesis gas stream using various separation techniques. For example, hydrogen may be separated from the mixed synthesis gas stream by subjecting the mixed synthesis gas stream to a pressure swing adsorption (PSA) operation or a cryogenic washing operation. In some examples, the hydrogen content of the hydrogen end product may be approximately 99.9%. The hydrogen end product stream can be discharged to an off-site location according to some examples. In lieu of or in addition to discharging the hydrogen to an off-site location, at least some of the hydrogen may instead be recycled back into the hydrogen production process.

Prior to being treated at the purification unit, the mixed synthesis gas stream may be subjected to other operations. One such operation may be a heat recovery operation. For example, in a configuration where the mixed synthesis gas stream is subjected to a shift reaction (see below), heat may be recovered from the mixed synthesis gas stream at a point between an exit of a first shift reactor and an entrance to a second shift reactor. In another example, heat may also or instead be recovered from the mixed synthesis gas stream after discharge of the mixed synthesis gas stream from the second shift reactor. Heat recovered from the mixed synthesis gas stream may be used for various purposes. The mixed synthesis gas stream may also be subjected to one or more cooling operations. For example, the mixed synthesis gas stream may be passed through an air cooler, a trim cooler, or a combination of both, to cool the mixed synthesis gas stream prior to further downstream processing thereof.

After any such heat recovery or cooling operations, the mixed synthesis gas stream may be received at a shift unit, where the mixed synthesis gas stream can be subjected to a shift reaction via which carbon monoxide present in the mixed synthesis gas stream is converted to carbon dioxide. Carbon dioxide can then be removed from the mixed synthesis gas stream at a downstream carbon dioxide removal unit. In some examples, the carbon dioxide removal unit may utilize one or a combination of solvent-based absorption, pressure swing adsorption, vacuum adsorption, cryogenic carbon capture, or membrane-based carbon dioxide removal technologies to remove carbon dioxide from the mixed synthesis gas stream. After being decarbonized by the carbon dioxide removal unit, the mixed synthesis gas stream can be directed to the purification unit and treated therein to produce the hydrogen end product, as described above.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A method comprising:
producing an effluent stream comprising hydrogen, carbon monoxide, carbon dioxide, and unreacted steam and methane, by directing a first portion of a heated mixed hydrocarbon feed stream to an electric steam methane reformer;
receiving, at a first inlet of a parallel reformer located downstream of the electric steam methane reformer, the effluent stream from the electric steam methane reformer;
receiving, at a second inlet of the parallel reformer, a reformer feed stream comprising steam and a second portion of the heated mixed hydrocarbon feed stream;
producing a mixed synthesis gas stream comprising hydrogen, carbon monoxide, carbon dioxide, and unreacted steam and methane at the parallel reformer using, at least in part, heat from the effluent stream; and
producing a hydrogen end product by separating hydrogen from the mixed synthesis gas stream.

2. The method of claim 1, wherein the heated mixed hydrocarbon feed stream further comprises a purge gas that is received from a downstream purification unit.

3. The method of claim 1, wherein the heated mixed hydrocarbon feed stream is produced by heating a mixed hydrocarbon feed stream using an electric mixed feed preheater or a gas-fired mixed feed preheater; optionally, wherein the mixed feed preheater is a gas-fired mixed feed preheater and a purge gas produced by a downstream purification unit is provided as a fuel gas to the mixed feed preheater.

4. The method of claim 1, wherein the heat used to support reforming reactions in the electric steam methane reformer is provided by an electric heating technique selected from the group consisting of resistive heating, inductive heating, microwave heating, and electro-reforming heating.

5. The method of claim 1, wherein the mixed synthesis gas stream from the parallel reformer is received at a downstream shift unit and subjected to a shift reaction where carbon monoxide in the mixed synthesis gas stream is converted to carbon dioxide by a water-gas shift reaction to produce a carbon dioxide rich synthesis gas stream.

6. The method of claim 5, wherein the carbon dioxide rich synthesis gas stream from the shift unit is received at a downstream carbon dioxide removal unit and carbon dioxide is removed from the carbon dioxide rich synthesis gas stream using a carbon dioxide removal technique selected from the group consisting of solvent-based absorption, pressure swing adsorption, vacuum adsorption, cryogenic carbon capture, and membrane separation; optionally, wherein a partially decarbonized synthesis gas stream comprising hydrogen and unconverted carbon monoxide and methane from the carbon dioxide removal unit is received at a downstream purification unit and carbon monoxide and methane are removed from the partially decarbonized synthesis gas stream via pressure swing adsorption or cryogenic washing to produce the hydrogen end product.

7. A system comprising:
an electric steam methane reformer arranged to produce an effluent stream comprising hydrogen, carbon monoxide, carbon dioxide, and unreacted steam and methane, from a first portion of a heated mixed hydrocarbon feed stream;
a parallel reformer arranged downstream of the electric steam methane reformer to receive the effluent stream from the electric steam methane reformer at a first inlet, to receive a reformer feed stream comprising steam and a second portion of the heated mixed hydrocarbon feed stream at a second inlet, and to produce a mixed synthesis gas stream comprising hydrogen, carbon monoxide, carbon dioxide, and unreacted steam and methane using, at least in part, heat from the effluent stream; and
a purification unit arranged downstream of the parallel reformer to receive the mixed synthesis gas stream from the parallel reformer and to produce a hydrogen end product by separating hydrogen from the mixed synthesis gas stream.

8. The system of claim 7, wherein the heated mixed hydrocarbon feed stream further comprises a purge gas produced by the purification unit.

9. The system of claim 7, further comprising an electric mixed feed preheater or a gas-fired mixed feed preheater arranged in a flow path of a mixed hydrocarbon feed stream to produce the heated mixed hydrocarbon feed stream; optionally, wherein the mixed feed preheater is a gas-fired mixed feed preheater that is in fluid communication with the purification unit to receive as a fuel gas therefrom, a purge gas produced by the purification unit.

10. The system of claim 7, wherein the electric steam methane reformer includes an electric heating mechanism selected from the group consisting of a resistive heater, an inductive heater, a microwave heater, and an electro-reforming cell.

11. The system of claim 7, further comprising a shift unit arranged to receive the mixed synthesis gas stream from the parallel reformer and to subject the mixed synthesis gas stream to a shift reaction whereby carbon monoxide in the mixed synthesis gas stream is converted to carbon dioxide.

12. The system of claim 11, further comprising a downstream carbon dioxide removal unit arranged to receive a carbon dioxide rich synthesis gas stream from the shift unit and to remove carbon dioxide from the carbon dioxide rich synthesis gas stream using a carbon dioxide removal technique selected from the group consisting of solvent-based absorption, pressure swing adsorption, vacuum adsorption, cryogenic carbon capture, and membrane separation; optionally, wherein the purification unit is arranged to receive a partially decarbonized synthesis gas stream comprising hydrogen, and unconverted carbon monoxide and methane from the carbon dioxide removal unit and to remove carbon monoxide and methane from the partially decarbonized synthesis gas stream via pressure swing adsorption or cryogenic washing to produce the hydrogen end product.

13. A method comprising:
heating a mixed hydrocarbon feed stream using a gas-fired mixed feed preheater to produce a heated mixed hydrocarbon feed stream;
reforming a first portion of the heated mixed hydrocarbon feed stream in an electric steam methane reformer to produce an effluent stream comprising hydrogen, carbon monoxide, carbon dioxide, and unreacted steam and methane;
reforming a second portion of the heated mixed hydrocarbon feed stream at a parallel reformer using, at least in part, heat from the effluent stream received by the parallel reformer;
receiving a mixed synthesis gas stream comprising hydrogen, carbon monoxide, carbon dioxide, and unreacted steam and methane from the parallel reformer at a purification unit and producing a purge gas stream by separating carbon monoxide and carbon dioxide from the hydrogen in the mixed synthesis gas stream; and
supplying at least a portion of the purge gas stream as a fuel gas to the gas-fired mixed feed preheater; optionally, wherein the purification unit separates the carbon monoxide and carbon dioxide from the hydrogen in the mixed synthesis gas stream via pressure swing adsorption or cryogenic washing.

14. The method of claim 13, wherein another portion of the purge gas is directed to the mixed hydrocarbon feed stream.

15. The method of claim 13, wherein, prior to the mixed synthesis gas stream being received at the purification unit:
the mixed synthesis gas stream is directed from the parallel reformer to a shift unit and is subjected to a shift reaction where carbon monoxide in the mixed synthesis gas stream is converted to carbon dioxide by a shift reaction; and
the mixed synthesis gas stream is directed from the shift unit to a downstream carbon dioxide removal unit where carbon dioxide is removed from the mixed synthesis gas stream using a carbon dioxide removal technique selected from the group consisting of solvent-based absorption, pressure swing adsorption, vacuum adsorption, cryogenic carbon capture, and membrane separation.
